# EUROPEAN PATENT APPLICATION

(11) **EP 1 800 571 A1**
(43) Date of publication of application: **27.06.2007**
(21) Application number: 06466017.8
(22) Date of filing: 19.12.2006
(51) Int. Cl.: A47J 9/00

(54) **Kneading and dosing tool of pastalike food, solidity of which was increased by cooling, in particular of butter**

(30) Priority: 20.12.2005 CZ 200517322 U
(71) Applicant: Ing. Petr Gross, s.r.o., Milotice nad Becvou - 753 67 (CZ)
(72) Inventor: Gross Petr, Vrbno pod Pradedem PSC 793 26 (CZ)
(74) Representative: Janik, Zdenek

(57) **Abstract**

Storage box (1) for placing a pastelike food, in particular of butter has one sliding wall (2). At least one outlet hole (4) is made in one stable wall (3) of the storage box (1) Cross section area of one outlet hole (4) or sume of the cross section areas of all outlet holes (4) is at least 60 times smaller then the area of the sliding wall (2). It is advantageous, if the box storage (1) has a cylindrical form and the sliding wall (2) is formed by the piston, which is moveable inside this cylinder. It is also advantageous, if the stable wall (3), in which at least one outlet hole (4) is made is situated opposite the sliding wall (2). Outlet hole (4) can have circular section of diameter 0.2 up to 2 mm or to be a slot 0.2 up to 2 mm wide. Alternatively more than three outlet holes (4) are placed in a straight line or stable wall (3) of the storage box (1) forms the removable head.

## Description

### Technical Field

The invention concerns a tool for kneading and dosing of pastelike food, solidity of which was increased by cooling, in particular butter, and solves a problem of dividing pastelike food block into an easy serveable or spreadable form, for instance transforming an undercooled butter block into butter doses of soft, easy spreadable form.

### Description of Prior Art

It is known that blocks of undercooled butter or other semisolid food, solidity of which was increased by cooling, for instance of paté, are cut into slices not only for the purpose of dividing required quantity, but also for the purpose of easy spreading, for instance on slices of bread. From EP 908127 a butter bin with a hinged lid and sliding bottom is known, where the lower edge of one lid side is provided with a blade for cutting off a solid butter layer placed on a sliding bottom and stepwise moved under the blade. From FR2600243 there is known a device for successive cutting off an upper layer of the solid butter block and moving chips into an adjacent storage box. From EP 600275 there is known a device for vertical slicing of the solid butter block with the help of cutting wires placed in parallel. From WO 02/060786 there is known a device for preparation of solid butter slices, the device is equipped with an electrically driven piston that pushes the butter block from a storage box through one round hole, a mouth of the storage box is fitted with a crosswise moving knife. The round hole diameter is shy of the storage box diameter so that no reworking and therethrough butter softening occurs in the course of butter push. From EP 945095 there is known a device containing a cylindrical storage box fitted with a piston, on the opposite wall of which a rotary knife is placed. In the course of piston movement, knife rotation and cutting off a thin layer of solid butter from the block occur simultaneously. From FR2542184 and FR2510381 there are known devices for preparation of solid butter flakes from the block, which is placed in a storage box and pushed with a sliding wall to a rotating grater provided with holes. Common disadvantage of all these devices cutting off a butter layer form the solid butter block is that no kneading of dosed matter occurs so that the made slices keep solid consistency and particular doses are difficult to spread. Disadvantage of the devices making flakes from a block is that handling with solid butter also in form of flakes is difficult, whereas spreading is not fully without problems, because particular flakes have different solidity in the centre and at surface. From WO 98/42243 there is known a butter dosing device provided with a storage box in form of a vertically oriented cylinder with a movable bottom. The upper wall of the storage box forms a working surface and is equipped with a square section hole for outlet of pressed out butter in square section form. A relevant butter quantity is taken off from the working surface manually with the help of a knife. Disadvantage of this device is that it is not possible to use it for direct placing butter on bread or other food on a plate, because relevant quantity cannot be easily separated from projecting profile in this case.

### Disclosure of Invention

The stated disadvantages are solved through the kneading and dosing tool of pastelike food solidity of which was increased by cooling, in particular butter, the tool consists of a storage box with at least one sliding wall, the basis of this tool is that at least one outlet hole is made at least in one stable storage box wall, whereas a cross section area of one outlet hole or sum of cross section areas of all outlet holes is at least 60 times smaller than an area of the sliding wall. Alternatively, the basis is that the storage box has a cylindrical form, the sliding wall of the storage box is made by a piston movable inside of this cylinder and at least one outlet hole is made in the stable wall of the storage box, the stable wall is placed to the piston on the opposite side of this cylinder. According to further alternatives, the basis is that at least one outlet hole has circular section of diameter 0.2 up to 2 mm or at least one outlet hole is a slot 0.2 up to 2 mm wide. Alternatively, there are three holes placed into a straight row. Alternatively, the stable wall of the storage box forms a removable head.
Advantage of this tool according of the invention is that reworking of solid butter occurs in the course of dosing through pushing through narrow small holes, its slight warming and therethrough its solidity reduction and spreadability increase. A further advantage is that projecting profiles are in so far thin that there is no need to cut off, because a required quantity can be easily separated from the solid block in the storage box after pressing out. A further advantage is that the tool can be stored in a refrigerator box, whereas only separated quantity changes in spreadable form. The further advantage is that the tool can be used directly for placing on a slice of bread, because it can be mobile and adapted for manual handling.

### Description of Drawings

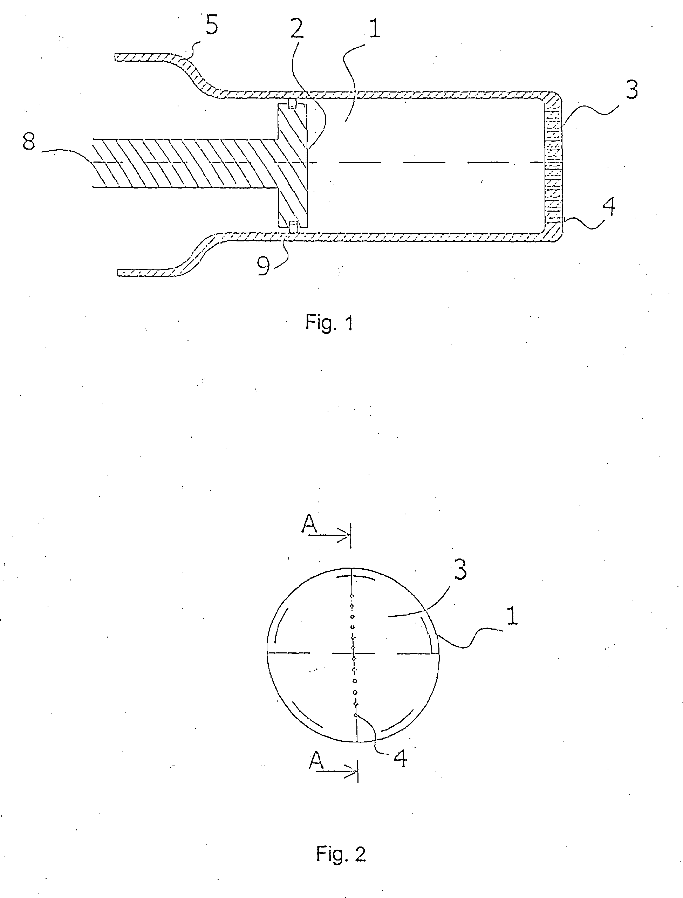

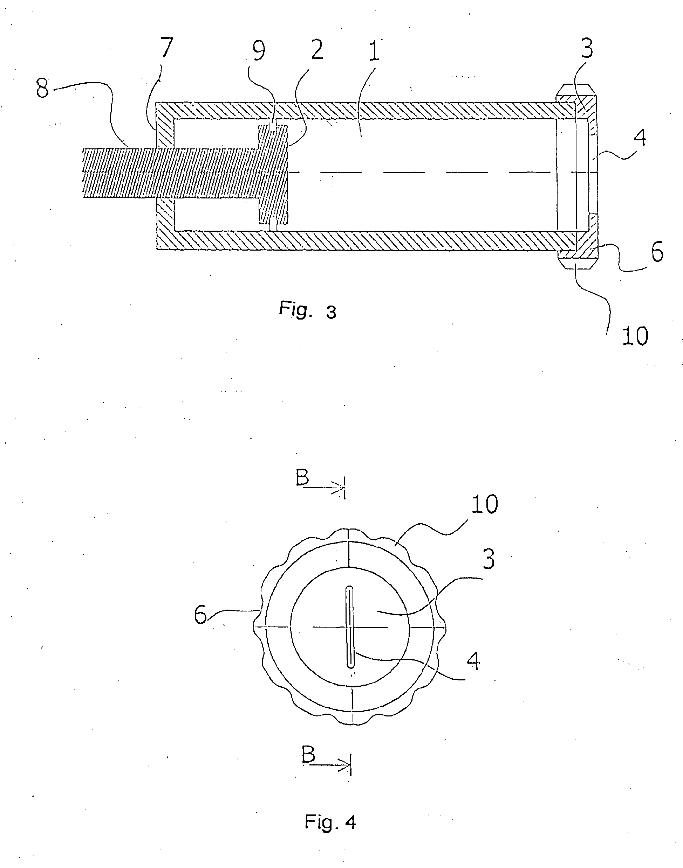

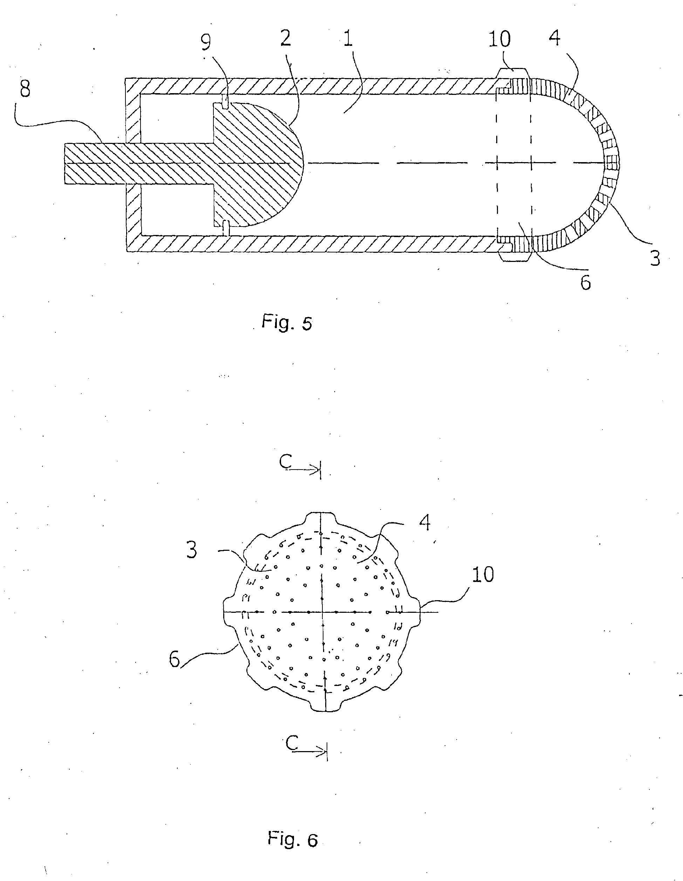

The Fig. 1 and Fig. 2 show the dosing tool of pastelike food, in particular of butter according to the Example 1, whereas the Fig. 1 is the section A-A from the Fig. 2. The Fig. 3 and Fig. 4 show the dosing tool of pastelike food, in particular of butter according to the Example 2, whereas the Fig. 3 is the section B-B from the Fig. 4. The Fig. 5 and Fig. 6 show the dosing tool of pastelike food, in particular of butter according to the Example 3, whereas the Fig. 5 is the section C-C from the Fig. 6.

### Examples of Embodiment of Invention

### Example 1

The dosing tool of pastelike food, in particular of butter according to the Example 1 consists of the storage box 1 made of an overhand open cylindrical box of inner diameter 40 mm, in which the piston forming the sliding wall 2 is pushed in. For easier piston pushing into the storage box 1 the storage box 1 is provided with the widened trim 5. In the box bottom forming the stable wall 3 of the storage box 1 there are made 12 outlet holes 4 of diameter 0.5 mm lined in a straight line. Sum of cross section areas of all outlet holes 4 is 133 times smaller than an area of the piston forming the sliding wall 2 of the storage box 1. The sliding wall 2 is sealed against the box walls by means 9 of the seal. In the course of use, the sliding wall 2 is pushed with a not shown mechanism linked with the guide rod 8 against the stable wall 3 containing the outlet holes 4. The tool according to this example can be advantageously used for placing of cooled butter on a slice of bread.

### Example 2

The dosing tool of pastelike food, in particular of butter according to the Example 2 consists of the storage box 1 made of a cylindrical box of inner diameter 30 mm, the first base of which forms the removable head 6. The second base 7 is provided with a hole for passage of the guide rod 8 linked with the piston forming the sliding wall 2 of the storage box 1. In the removable head 6 forming the stable wall 3 of the storage box 1, the outlet hole 4 in form of a slot 22 mm long and 0.3 mm wide is made. The slot area forming the outlet hole 4 is 107 times smaller than the piston area forming the sliding wall 2 of the storage box 1. The sliding wall 2 is sealed against the box walls by means 9 of the seal. For easy disassembly the outer circumference of the removable head 6 is provided with the projections 10. In the course of use, the sliding wall 2 is pushed with a not shown mechanism against the removable head 6 containing the outlet hole 4. The tool according to this example can be advantageously used for placing of butter on a roll.

### Example 3

The dosing tool of pastelike food, in particular of butter according to the Example 1 consists of the storage box 1 made of a cylindrical box of inner diameter 40 mm, which is provided with the removable head 6 forming a hollow hemispheric body that is provided with 84 outlet holes 4 of circular section of diameter 0.6 mm. The outlet hole axes are oriented in sphere centre defining a sphere surface of the removable head 6. The opposite wall of the storage box 1 is provided with a hole for passage of the guide rod 8 linked with the piston forming the sliding wall 2 of he storage box 1. The inner surface of the sliding wall 2 is in hemispherical form. Sum of cross section areas of all outlet holes 4 is 106 times smaller than an area of the piston forming the sliding wall 2 of the storage box 1. The sliding wall 2 is sealed against the box walls by means of the seal 9. For easy disassembly the outer circumference of the removable head 6 is provided with the projections 10. In the course of use, the sliding wall 2 is pushed with a not shown mechanism against the removable head 6 containing the outlet holes 4. The tool according to this example can be advantageously used for decorative serving of soft cheese on a sandwich.

### Industrial Applicability

The invention can be used for softening of all paste like materials, solidity of which reduces with temperature increase, for instance of undercooled fat spreads.

## Claims

1. The kneading and dosing tool of pastelike food, solidity of which was increased by cooling, in particular of butter, which consists of the storage box (1) with at least one sliding wall (2) **characterized in that** at least one outlet hole (4) is made at least in one stable wall (3) of the storage box (1), whereas the cross section area of one outlet hole (4) or sum of the cross section areas of all outlet holes (4) is at least 60 times smaller than the area of the sliding wall (2).

2. The dosing tool of pastelike food according to the claim 1 **characterized in that** the storage box (1) has a cylindrical form, the sliding wall (2) of the storage box (1) is formed by the piston, which is movable inside of this cylinder and at least one outlet hole (4) is made in the stable wall (3) of the storage box (1), the stable wall (3) is placed to the piston on the opposite side of this cylinder.

3. The dosing tool of pastelike food according to the claim 1 **characterized in that** at least one outlet hole (4) has circular section of diameter 0.2 up to 2 mm.

4. The dosing tool of pastelike food according to the claim 1 **characterized in that** at least one outlet hole (4) is a slot 0.2 up to 2 mm wide.

5. The dosing tool of pastelike food according to the claim 1 **characterized in that** at least three holes (4) are placed in a straight line.

6. The dosing tool of pastelike food according to the claim 1 **characterized in that** the stable wall (3) of the storage box (1) forms the removable head.
